# FASCICULE DE BREVET EUROPEEN

(11) **EP 1 243 823 B1**
(45) Date de publication et mention de la délivrance du brevet: **16.07.2008**
(21) Numéro de dépôt: 02290386.8
(22) Date de dépôt: 18.02.2002
(51) Int. Cl.: F16K 1/30

(54) **Robinet avec dispositif d'arret d'urgence**
Ventil mit Notabschaltvorrichtung
Valve with emergency shut down

(30) Priorité: 19.03.2001 FR 0103682
(43) Date de publication de la demande: 25.09.2002
(73) Titulaire: L'AIR LIQUIDE, Société Anonyme pour l'Etude et l'Exploitation des Procédés Georges Claude, 75007 Paris (FR)
(72) Inventeur: Pisot, Philippe, 95590 Presles (FR); Cannet, Gilles, 95620 Parmain (FR)
(74) Mandataire: Pittis, Olivier

(56) Documents cités:
- EP-A- 0 145 828
- EP-A- 0 458 253
- FR-A- 2 087 552
- FR-A- 2 251 766
- US-A- 5 605 225

## Description

L'invention concerne un robinet ou robinet-détendeur pour récipients de fluide sous pression, notamment pour bouteilles de gaz, comprenant un dispositif d'arrêt d'urgence.

Les robinets de bouteilles de gaz ont pour fonction habituelle d'établir et d'interrompre la circulation du gaz de l'intérieur vers l'extérieur de la bouteille pour la vidange et réciproquement pour le remplissage de celle-ci. En plus de cette fonction de base, il existe des robinets à retenue de pression pour interdire une vidange totale de la bouteille, des robinets à détente ou prédétente intégrée pour libérer le gaz à une pression fixe ou réglable, des robinets à débitmètre intégré et des robinets intégrant des dispositifs de sécurité de type limiteur de pression.

Il existe aussi des bouteilles équipées de robinets à détendeurs intégrés (RDI) tendant à rendre obsolètes les robinets traditionnels qui conduisent à une sécurité et un confort d'utilisation accrus.

La présente invention s'inscrit dans ce contexte et vise à proposer un robinet ou un robinet à détendeur intégré amélioré de manière à permettre de garantir encore plus de sécurité d'utilisation à l'utilisateur.

Le document FR-A-2087552 décrit un robinet pour récipient de fluide sous pression comprenant un corps de robinet au sein duquel est aménagé au moins un passage interne de fluide et comportant des moyens de contrôle du fluide dans ledit passage interne de fluide permettant d'interrompre et/ou d'autoriser progressivement la circulation de fluide dans au moins une partie dudit passage interne de fluide, lesdits moyens de contrôle du fluide comportant une pièce-clapet et un siège de clapet, le robinet comportant, en outre, un dispositif d'arrêt d'urgence actionnable manuellement par un opérateur et permettant d'interrompre instantanément et totalement toute circulation de fluide dans ledit passage de fluide, après actionnement par l'opérateur, le dispositif d'arrêt d'urgence comprenant une tête mobile uniquement en translation selon l'axe (XX') du robinet et se réarmant par rotation autour de l'axe (XX') d'une partie rotative. Le robinet selon l'invention présente les caractéristiques de la partie caractérisante de la revendication 1.

Selon le cas, le robinet de l'invention comprend les caractéristiques suivantes :
- un dispositif assurant les fonctions de limiteur de débit à l'ouverture du robinet et d'anti-retour de gaz à déverrouillage pneumatique.
- une partie détendeur intégrée ou solidaire dudit corps de robinet permettant d'opérer une diminution de la pression du fluide véhiculé par ledit passage interne de fluide.
- de préférence l'axe comporte un galet libre en rotation autour de l'extrémité de l'axe située dans la came hélicoïdale.
- un palier, de préférence un premier palier correspondant à une position d'ouverture dans laquelle le gaz peut circuler dans le passage de fluide et un deuxième palier correspondant à une position de fermeture dans laquelle toute circulation de gaz est interrompue dans ledit passage de fluide.
- la tête mobile et/ou la bague rotative coopèrent, directement ou indirectement, avec au moins un coulisseau mobile selon l'axe (XX') et agissant sur la pièce-clapet de manière à rapprocher ou à éloigner ladite pièce-clapet du siège de clapet, de préférence le coulisseau est repoussé dans le sens tendant à l'éloigner de la pièce-clapet sous l'effort d'un moyen à ressort.
- la bague rotative est solidaire du volant de manipulation.
- la tête mobile selon l'axe (XX') comporte un deuxième axe muni d'un galet venant coopérer avec une deuxième came aménagée dans la bague rotative, de préférence ladite deuxième came est hélicoïdale.

L'invention concerne aussi un récipient de gaz sous pression équipé d'un robinet, notamment une bouteille de gaz.

L'invention est illustrée sur les figures annexées données à titre purement illustratif.

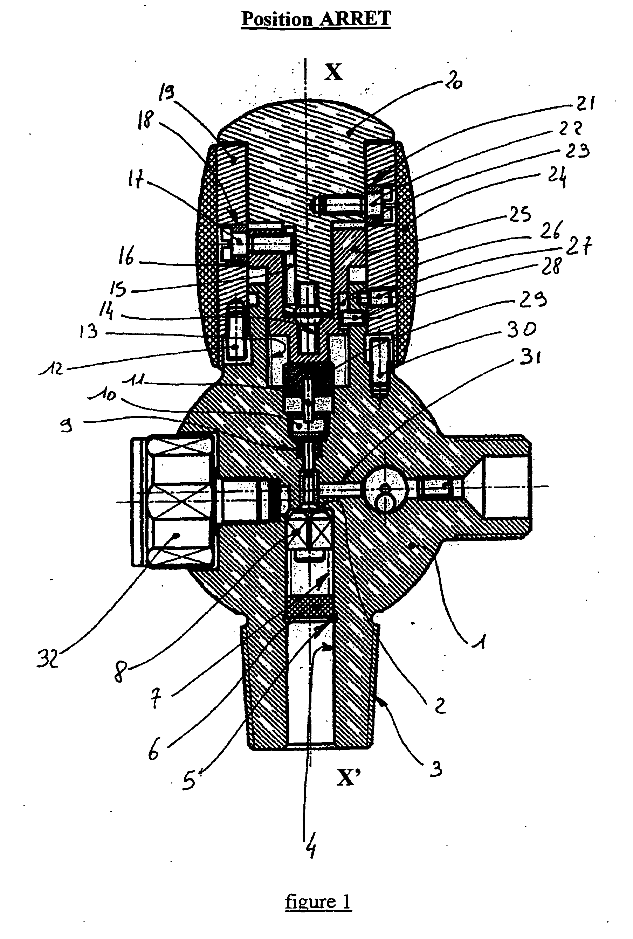

La figure 1 représente un ensemble robinet à détendeur intégré selon la présente invention dont le corps 1 du robinet est monté sur une bouteille grâce au filetage conique 3 ; un couple de vissage spécifique assurant l'étanchéité entre le robinet et la bouteille. Le puits 4 coïncide avec l'intérieur de la bouteille. Le manomètre 32 indique en permanence la pression du gaz contenu dans la bouteille grâce à un piquage sur le puits 4. Dans ce puits 4 se trouve un clapet 8 dont le ressort 7 est maintenu en compression grâce à un ensemble filtre 6 et bague élastique 5. L'effort résultant de la pression du ressort 7 ainsi que de la pression du gaz contenu dans la bouteille force le clapet 8 sur son siège 2 en un contact étanche. Dans cette position le robinet est fermé.

La partie haute du robinet comporte les organes de manoeuvre 19, 24, permettant l'ouverture et la fermeture de celui-ci, en particulier un volant 24 marche / arrêt composé d'une bague 19, celle-ci n'étant libre qu'en rotation par rapport au corps 1 grâce à une vis à téton 27 engagée dans une gorge ménagée dans le corps 1. Pour une bonne préhension du volant 24, un revêtement élastomère est rapporté sur la bague 19. Un ressort de torsion comprimé entre la butée mobile 12 vissée sur la bague 19 et la butée fixe 30 vissée sur le corps 1 tend à ramener en permanence le volant 24 en position arrêt.

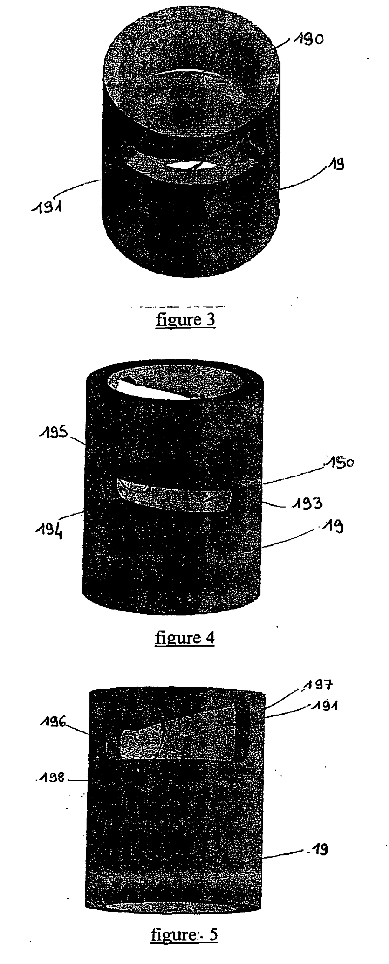

La bague 19 comporte deux cames hélicoïdales 190 et 191 (voir figure 3). Un galet 16 libre en rotation autour de l'axe 17 est logé dans la came hélicoïdale 190, un galet 23 libre en rotation autour de l'axe 22 est logé dans la came hélicoïdale 191.

L'axe 17 du galet 16 est fixé sur le coulisseau 25, ce dernier n'étant libre qu'en translation par rapport au corps 1 grâce à la vis 28 vissée dans le corps 1 et engagée dans la rainure 26 ménagée dans le coulisseau 25. Le ressort 13 agissant sur le coulisseau 25 permet un contact permanent du galet 16 sur la surface 195 de la came hélicoïdale 190 (voir figure 4). Le fond du coulisseau 25 est en contact avec le plateau 29 lui-même en contact avec le pousse clapet 11 sur lequel un joint 9 tenu par un bouchon percé 10 assure l'étanchéité du système. Lorsque le robinet est en position arrêt un jeu, demeure entre le pousse clapet 11 et la tige du clapet 8 de manière à ce que ce dernier assure son étanchéité.

L'axe 22 du galet 23 est fixé sur la partie d'arrêt d'urgence dite "coup de poing" constituant une tête 20 en forme de champignon qui n'est libre qu'en translation par rapport au coulisseau 25 et au corps 1 grâce à l'extrémité de l'axe 22 engagée dans la rainure 15 ménagée dans la tête 20. Le ressort 14 agissant sur la tête 20 permet un contact permanent du galet 23 sur la surface 198 de la came hélicoïdale 191 (voir figure 5). Lorsque le robinet est en position arrêt, le galet 23 est logé dans l'empreinte 196 de la came 191, ceci formant un point dur marquant cette position, la tête 20 est en position basse.

Pour ouvrir le robinet, l'utilisateur effectue une rotation de 90° du volant 24 autour de l'axe XX' suivant le sens anti-horaire en combattant l'effort du ressort de rappel. Pendant cette rotation, les galets 16 et 23 suivent respectivement les pentes 195 et 198 des cames 190 et 191.

Le galet 16 passe de la position 194 à la position 193, ceci entraîne un déplacement vertical (sens X vers X') du coulisseau 25 ainsi que du plateau 29. Le pousse clapet 11 vient appuyer et ouvrir le clapet 8 qui perd son étanchéité, le gaz sous pression peut ainsi sortir par le canal 31.

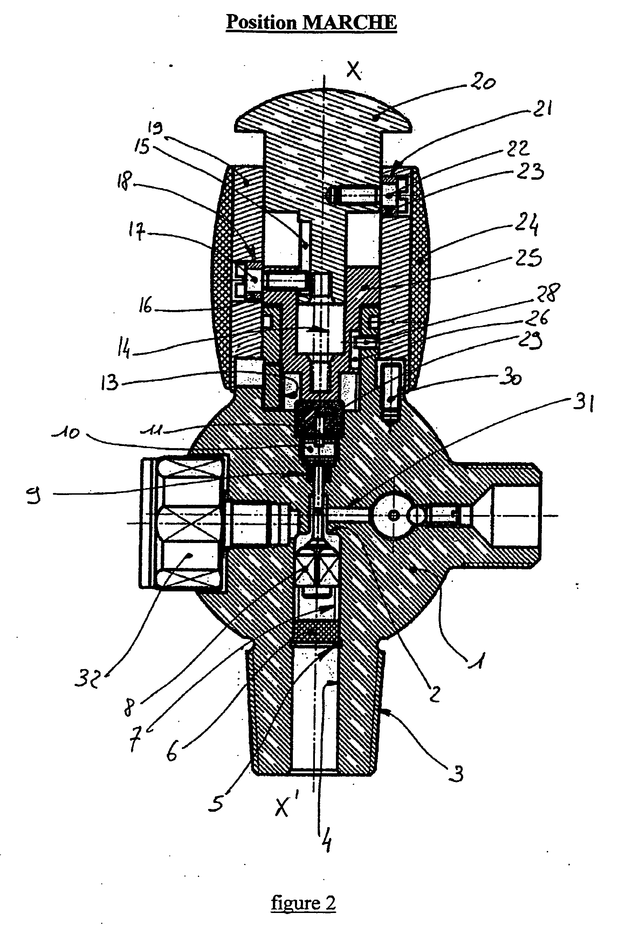

Le galet 23 passe de la position 196 à la position 197, ceci entraîne un déplacement vertical (sens X' vers X) de la tête 20. Arrivé dans l'empreinte 197 de la came hélicoïdale 191, le galet 23 trouve un nouveau point dur marquant la position marche. La tête 20 est opérationnel (voir figure 2) et par la même occasion indique l'état du robinet.

Pour fermer le robinet, deux solutions sont offertes à l'utilisateur.

La première solution utilisée lors d'un arrêt normal de la distribution de gaz dans laquelle la fermeture du gaz se fait en tournant le volant dans le sens horaire. Les actions qui en résultent sont inversées par rapport à la description précédente.

La seconde solution utilisée en cas d'arrêt d'urgence où la coupure instantanée de la distribution de gaz se fait en pressant la tête 20 dans le sens X vers X'. Le galet 23 n'est plus en contact avec l'empreinte 197, le ressort de rappel du volant 24 le ramène en position arrêt (galet 23 dans l'empreinte). Les actions qui en résultent sont inversées par rapport à la description précédente.

L'étanchéité et la fixation du robinet sur la bouteille sont assurés grâce au cône taraudé usiné selon la norme EN 629. Le robinet comporte une jauge indiquant en permanence le contenu de la bouteille. La sortie du robinet est matérialisée par le raccord qui diffère selon la nature du gaz conformément à la norme NF E-29-650. L'ouverture et la fermeture du robinet s'effectuent aisément en agissant sur le volant.

Le dispositif d'urgence de type "coup de poing" selon l'invention permet, en outre, une visualisation de l'état du système et peut être actionné facilement en cas d'arrêt d'urgence.

En d'autres termes, elle assure deux fonctions, à savoir elle permet de "couper" le gaz en cas d'arrêt d'urgence, sans se poser de question sur la façon dont fonctionne ou se manoeuvre le robinet et elle indique l'état "ouvert" ou "fermé", "marche" ou "arrêt" du robinet selon une symbolique très communément admise puisque lorsque la tête 20 en forme de champignon est en saillie par rapport au corps 1 du dispositif, cela signifie que le robinet est ouvert et que le circuit en aval du robinet est mis sous pression, c'est-à-dire alimenté en gaz.

Pour arrêter le gaz, il suffit alors d'écraser la tête 20 en forme de "champignon", qui se déplace de ce fait vers le corps 1 de robinet.

L'axe 22 est solidaire de la tête 20 en forme de champignon et porte un galet 23 libre en rotation destiné à limiter les usures et les efforts de friction. En position "marche", l'axe 22 et le galet 23 sont en prise dans la bague 19 sur le palier 197. En écrasant la tête 20, la bague 19 tourne sous l'effet combiné du ressort 13, du galet 16 de la deuxième came 17 et de la came 190 et permet ainsi au coulisseau 25 de monter. Le coulisseau 25 en montant laisse le clapet 8 porter sur son siège 2, ce qui a pour effet d'interrompre le passage du gaz du puits 4 vers le passage de sortie de gaz 31.

L'axe 22 et le galet 23 rentrent en bout de course dans un second palier 196. La tête 20 en forme de "champignon" reste écrasée : c'est la position arrêt.

Les paliers 197 et 196 de la came ou rampe 190 sont plus ou moins marqués selon la stabilité voulue : plans, ils constituent une simple fin de course alors que concaves, ils introduisent un "point dur".

Le volant 24 qui est solidaire de la bague 19 commande la fermeture ou l'ouverture du gaz en faisant monter ou descendre le coulisseau 25 et le clapet 8. Le volant 24 revient en position arrêt, lorsque la tête 20 en forme de champignon est écrasée et celle-ci s'érige en position marche, lorsque le volant 24 est tourné pour ouvrir le robinet. Le volant 24 est donc aussi le moyen d'armer la fonction arrêt d'urgence lors de l'ouverture.

En tournant le volant 24 par l'effet de la came 190 sur le galet 18, le coulisseau 25 qui ne peut tourner à cause de la vis 28 (point fixe dans le corps 1) et de la rainure 26, se déplace en translation selon l'axe (X, X') vers le bas, écrase le ressort 13 et ouvre le clapet 8. Tout ceci est la fonction première d'ouverture du gaz par le volant. Mais en tournant le volant 24, on fait également sortir l'axe 22 et le galet 23 de palier 196 et sous l'effet combiné du ressort 14 et de l'angle de la came, l'axe 22 et le galet 23 et la tête 20 qui sont solidaires, remontent pour venir occuper la position marche, stable grâce au palier 197.

En résumé, la fonction marche/arrêt de ce robinet est assurée par un clapet actionné à l'ouverture par un volant tournant et à la fermeture soit par ledit volant soit par bouton translatant (dit coup de poing). Le bouton translatant indique en plus, par sa position haute ou basse, l'état ouvert ou fermé du robinet.

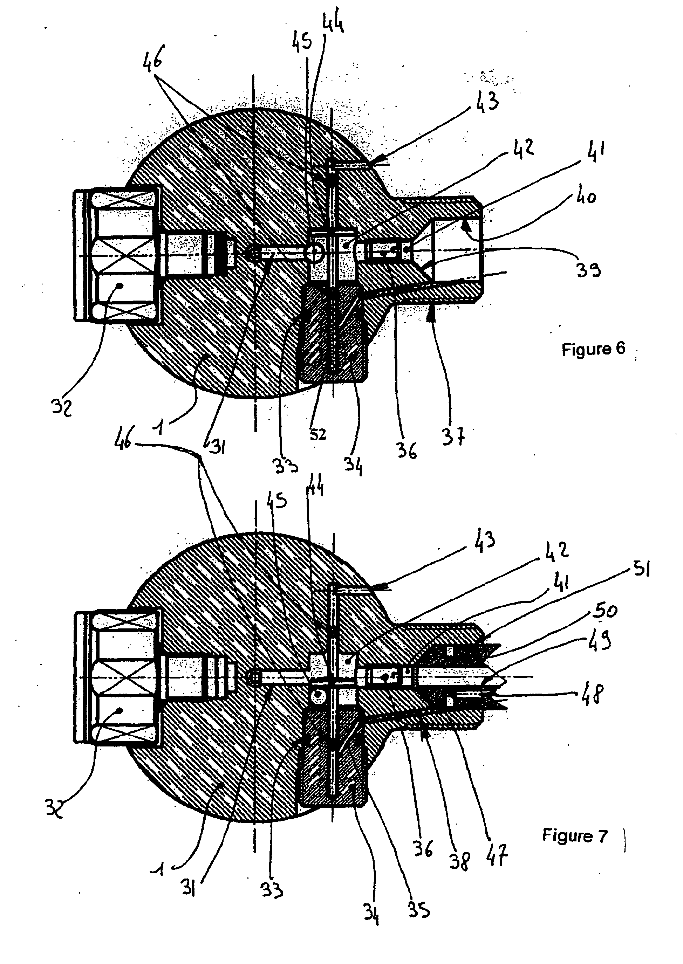

De façon optionnelle, le robinet à détendeur peut aussi comprendre un dispositif annexe, schématisé sur la figure 6, assurant les fonctions de limitateur de débit à l'ouverture de la bouteille, d'anti-retour de gaz et de remplissage avec détrompeur.

Sur la figure 6, on voit, en amont du dispositif marche / arrêt comprenant le clapet 8, le dispositif annexe qui comprend une chambre 42 ménagée dans le corps 1, un piston 44 et deux joints toriques 46 (de même diamètre pour que le piston soit insensible à la pression du gaz dans la chambre 42) assurent l'étanchéité vers l'extérieur. Le bouchon 34 vissé dans le corps 1 permet le montage de ce dispositif, le joint torique 33 assure une bonne correspondance des canaux 35 et 38 (voir figure 7). Un ressort 52 force le piston dans la position présentée dans la figure 6. Dans cette chambre 42, se trouve aussi une bille « folle » 45 dont le diamètre est supérieur au diamètre du canal 31 et très légèrement inférieur au diamètre du canal 41.

Ce dispositif annexe prévient les retours de gaz pour éviter la pollution du contenu de la bouteille et les remplissages par des personnes non habilitées. Si du gaz remonte le canal 41, arrive dans la chambre 42, l'effet dynamique de ce gaz va déplacer la bille 45 qui va s'installer à l'entrée du canal 31. Dans cette position, la bille assure une étanchéité qui empêche le gaz d'accéder au canal 31.

Ce dispositif annexe permet aussi d'éviter les phénomènes de compression adiabatique et de limiter le risque d'accidents qu'entraînerait l'ouverture du robinet sans détendeur. En effet, à l'ouverture du robinet, le gaz passe dans le canal 31 et entre dans la chambre 42, l'effet dynamique de ce gaz va déplacer la bille 45 vers le canal 41. Le diamètre de la bille 45 étant légèrement plus petit que le diamètre du canal 41, celle-ci va s'installer contre la butée 36 en laissant une très faible section de passage au gaz (voir figure 2). La section de passage du gaz et sa pression déterminent son débit.

Ce dispositif étant anti-retour de gaz, le remplissage n'est possible qu'avec une prise et une procédure spécifique. Le raccord du robinet 37, en plus des spécifications dimensionnelles normalisées pour la fixation et l'étanchéité, dispose d'un canal 38 correspondant avec le canal 35 du bouchon 34. La prise de conditionnement spécifique 50 comporte un canal de remplissage 49 et un canal 48. Une fois la prise de conditionnement montée, un joint torique 47 vient créer une étanchéité sur la surface 39 (étanchéité circuit de remplissage). Un joint torique 51 vient créer une étanchéité sur la surface 40 (étanchéité circuit de déverrouillage du dispositif). Après l'ouverture du robinet, une dépression communiquée à l'extrémité du piston 44 contenue dans le bouchon 34, au travers des canaux 48, 38 et 35 va permettre au piston 44 de combattre l'effort du ressort 52 pour trouver la position de la figure 7 (ce déplacement n'est possible qu'avec l'existence de la mise à l'air 43). La dépression du canal 48 est générée par une pompe à vide. Dans cette position le piston 44 va emprisonner la bille 45, le remplissage proprement dit peut commencer. En variante, le dispositif peut être configuré pour qu'à la place d'une dépression, le déverrouillage du dispositif soit assuré par la pression du gaz qu'on conditionne. Par un canal prévu à cet effet et une zone d'étanchéité spéciale sur la surface 39, la pression du gaz serait communiquée au canal 43 redessiné pour ne plus déboucher sur l'ambiant et le canal 48 serait lui mis à l'ambiant. Le déverrouillage n'est possible qu'en respectant la position des étanchéités entre la prise de conditionnement et le raccord de robinet.

## Revendications

1. Robinet pour récipient de fluide sous pression comprenant un corps de robinet au sein duquel est aménagé au moins un passage interne de fluide (4, 31) et comportant des moyens de contrôle ( 7, 8, 2, 11, 29, 13, 28, 25, 17, 18, 190, 19, 24) du fluide dans ledit passage interne de fluide permettant d'interrompre et/ou d'autoriser progressivement la circulation de fluide dans au moins une partie dudit passage interne de fluide, lesdits moyens de contrôle du fluide comportant une pièce-clapet (8) et un siège (2) de clapet, comportant en outre, un dispositif d'arrêt d'urgence (20, 22, 21, 191, 15, 14) actionnable manuellement par un opérateur et permettant d'interrompre instantanément et totalement toute circulation de fluide dans ledit passage (4, 31) de fluide, après actionnement par l'opérateur, le dispositif d'arrêt d'urgence (20, 22, 21, 191, 15, 14) comprenant une tête (20) mobile uniquement en translation selon l'axe (XX') du robinet et se réarmant par rotation autour de l'axe (XX') d'une partie rotative (19,24), **caractérisé en ce que** la tête (20) comprend au moins un axe (22) et la partie rotative (19, 24) comprend une bague (19) comportant au moins une came (191) de forme hélicoïdale, ledit axe (22) coopérant avec ladite came hélicoïdale (191) en s'y déplaçant sous l'effet d'une pression manuelle de l'opérateur sur la tête (20).

2. Robinet selon la revendication 1, **caractérisé en ce que** le passage interne (4, 31) comprend un dispositif (42, 44, 46, 33, 34, 36) assurant les fonctions de limiteur de débit à l'ouverture du robinet et d'anti-retour de gaz à déverrouillage pneumatique.

3. Robinet selon l'une des revendications 1 à 2, **caractérisé en ce qu'**il comporte une partie détendeur intégrée ou solidaire dudit corps de robinet permettant d'opérer une diminution de la pression du fluide véhiculé par ledit passage interne de fluide.

4. Robinet selon l'une quelconque des revendications 1 à 3, **caractérisé en ce que** l'axe (22) comporte un galet (23) libre en rotation autour de l'extrémité de l'axe (22) située dans la came hélicoïdale (191).

5. Robinet selon la revendication 4, **caractérisé en ce que** la came (191) recevant l'axe (22) comporte au moins un palier (197, 196), de préférence un premier palier (197) correspondant à une position d'ouverture dans laquelle le gaz peut circuler dans le passage de fluide (4, 31) et un deuxième palier (196) correspondant à une position de fermeture dans laquelle toute circulation de gaz est interrompue dans ledit passage de fluide (4, 31).

6. Robinet selon l'une des revendications 1 à 5, **caractérisé en ce que** la tête (20) mobile et/ou la bague (19) rotative coopèrent, directement ou indirectement, avec au moins un coulisseau (25) mobile selon l'axe (XX') et agissant sur la pièce-clapet (8) de manière à rapprocher ou à éloigner ladite pièce-clapet (8) du siège (2) de clape.

7. Robinet selon la revendication 6, **caractérisé en ce que** le coulisseau (25) est repoussé dans le sens tendant à l'éloigner de la pièce-clapet (8) sous l'effort d'un moyen à ressort (13).

8. Robinet selon l'une des revendications 1 à 7, **caractérisé en ce que** la bague (19) rotative est solidaire d'un volant (24) de manipulation, la bague (19) et le volant (24) formant la partie rotative.

9. Robinet selon l'une des revendications 1 à 8, **caractérisé en ce que** la tête (20) mobile selon l'axe (XX') comporte un deuxième axe (17) muni d'un galet (16) venant coopérer avec une deuxième came (19) aménagée dans la bague (19) rotative, de préférence ladite deuxième came (190) est hélicoïdale.

10. Récipient de gaz sous pression équipé d'un robinet selon l'une des revendications 1 à 9, notamment une bouteille de gaz.

## Claims

1. Valve for pressurized fluid container comprising a tap body containing at least one internal fluid passage (4, 31) and comprising means (7, 8, 2, 11, 29, 13, 28, 25, 17, 18, 190, 19, 24) for the control of the fluid in said internal fluid passage, for interrupting and/or progressively allowing fluid to flow through at least part of said internal fluid passage, said fluid control means comprising an open/close piece (8) and an open/close seat (2), further comprising an emergency shut down device (20, 22, 21, 191, 15, 14) actuatable manually by an operator and allowing instantaneous and total interruption of all fluid flow through said fluid passage (4, 31), after actuation by the operator, the emergency shut down device (20, 22, 21, 191, 15, 14) comprising a head (20) that can be moved, translationally only, the valve axis (XX') and being reset by, along the rotation of a rotational part (19, 24) about the axis (XX'), said valve being **characterized in that** the head (20) comprises at least one pin (22) and the rotational part (19, 24) comprises a ring (19) having at least one helical cam (191), said pin (22) engaging with said helical cam (191) by moving along it due to the action of manual pressure by the operator on the head (20).

2. Valve according to Claim 1, **characterized in that** the internal passage (4, 31) comprises a device (42, 44, 46, 33, 34, 36) performing the functions of flow limiter on valve opening and of gas nonreturn on pneumatic release.

3. Valve according to either of Claims 1 and 2, **characterized in that** it comprises a pressure-reducing part built into or connected to said valve body for bringing about a decrease in the pressure of the fluid carried by said internal fluid passage.

4. Valve according to any one of Claims 1 to 3, **characterized in that** the pin (22) has a roller (23) rotating idly about the end of the pin (22) situated in the helical cam (191).

5. Valve according to Claim 4, **characterized in that** the cam (191) accommodating the pin (22) has at least one bearing (197, 196), preferably a first bearing (197) corresponding to an open position in which the gas can flow through the fluid passage (4, 31) and a second bearing (196) corresponding to a closed position in which the flow of gas through said fluid passage (4, 31) is completely interrupted.

6. Valve according to one of Claims 1 to 5, **characterized in that** the moveable head (20) and/or the rotational ring (19) engage, directly or indirectly, with at least one slider (25) which can move parallel to the axis (XX') and act on the open/close piece (8) in such a way as to move said open/close piece (8) towards or away from the open/close seat (2).

7. Valve according to Claim 6, **characterized in that** the slider (25) is pushed in the direction tending to move it away from the open/close piece (8) under the action of a spring means (13).

8. Valve according to one of Claims 1 to 7, **characterized in that** the rotational ring (19) is connected to the handling knob (24), the ring (19) and the knob (24) forming the rotational part.

9. Valve according to one of Claims 1 to 8, **characterized in that** the head (20) which can move along the axis (XX') has a second pin (17) provided with a roller (16) that engages with a second cam (190) formed in the rotational ring (19), said second cam (190) preferably being helical.

10. Pressurized gas container fitted with a valve according to one of Claims 1 to 9, especially a gas bottle.

## Patentansprüche

1. Ventil für Behälter für unter Druck stehendes Fluid, das einen Ventilkörper umfasst, innerhalb dessen mindestens ein interner Fluiddurchlass (4, 31) eingerichtet ist und der Mittel zur Lenkung (7, 8, 2, 11, 29, 13, 28, 25, 17, 18, 190, 19, 24) des Fluids in dem internen Fluiddurchlass umfasst, die ermöglichen, die Fluidzirkulation in mindestens einem Teil des internen Fluiddurchlasses progressiv zu unterbrechen und/oder zuzulassen, wobei die Mittel zur Lenkung des Fluids ein Klappenteil (8) und einen Klappensitz (2) umfassen, außerdem eine Notabschaltvorrichtung (20, 22, 21, 191, 15, 14) umfassend, die von einem Bediener manuell betätigt werden kann und ermöglicht, jegliche Fluidzirkulation in dem Fluiddurchlass (4, 31) nach Betätigung durch den Bediener sofort und vollständig zu unterbrechen, wobei die Notabschaltvorrichtung (20, 22, 21, 191, 15, 14) einen nur bei Bewegung entlang der Achse (XX') des Ventils beweglichen Kopf (20) umfasst, der mittels Drehung um die Achse (XX') eines drehbaren Teils (19, 24) zurückgestellt wird,
**dadurch gekennzeichnet, dass** der Kopf (20) mindestens eine Achse (22) umfasst und der drehbare Teil (19, 24) eine Buchse (19) umfasst, die mindestens einen Nocken (191) in Schneckenform umfasst, wobei die Achse (22) mit dem schneckenförmigen Nocken (191) zusammenwirkt, um diesen unter Einwirkung eines manuellen Drucks des Bedieners auf den Kopf (20) zu verschieben.

2. Ventil nach Anspruch 1, **dadurch gekennzeichnet, dass** der interne Durchlass (4, 31) eine Vorrichtung (42, 44, 46, 33, 34, 36) umfasst, die die Funktionen des Durchflussreglers bei Öffnung des Ventils und des Gasrückschlagschutzes mittels pneumatischer Entriegelung sicherstellt.

3. Ventil nach einem der Ansprüche 1 bis 2, **dadurch gekennzeichnet, dass** es einen Reduzierventilteil umfasst, der in den Ventilkörper integriert ist oder mit diesem fest verbunden ist, der ermöglicht, eine Verringerung des Drucks des Fluids, das durch den internen Fluiddurchlass transportiert wird, zu bewirken.

4. Ventil nach einem der Ansprüche 1 bis 3, **dadurch gekennzeichnet, dass** die Achse (22) eine Rolle (23) umfasst, die sich frei um das Ende der Achse (22) bewegen kann, die sich in dem schneckenförmigen Nocken (191) befindet.

5. Ventil nach Anspruch 4, **dadurch gekennzeichnet, dass** der Nocken (191), der die Achse (22) aufnimmt, mindestens ein Achslager (197, 196), vorzugsweise ein erstes Achslager (197), das einer Öffnungsstellung entspricht, in der das Gas in dem Fluiddurchlass (4, 31) zirkulieren kann, und ein zweites Achslager (196), das einer Schließstellung entspricht, in der jegliche Gaszirkulation in dem Fluiddurchlass (4, 31) unterbrochen ist, umfasst.

6. Ventil nach einem der Ansprüche 1 bis 5, **dadurch gekennzeichnet, dass** der bewegliche Kopf (20) und/oder die drehbare Buchse (19) direkt oder indirekt mit mindestens einem Gleitschuh (25), der entlang der Achse (XX') beweglich ist, zusammenwirkt und auf den Klappenteil (8) derart einwirkt, dass der Klappenteil (8) sich dem Klappensitz (2) nähert oder von diesem abrückt.

7. Ventil nach Anspruch 6, **dadurch gekennzeichnet, dass** der Gleitschuh (25) in der Richtung zurückgestoßen wird, die dahingehend tendiert, den Klappenteil (8) unter Einwirkung eines Federmittels (13) abzurücken.

8. Ventil nach einem der Ansprüche 1 bis 7, **dadurch gekennzeichnet, dass** die drehbare Buchse (19) fest mit dem Bedienrad (24) verbunden ist, wobei die Buchse (19) und das Rad (24) den drehbaren Teil bilden.

9. Ventil nach einem der Ansprüche 1 bis 8, **dadurch gekennzeichnet, dass** der Kopf (20), der entlang der Achse (XX') beweglich ist, eine zweite Achse (17) umfasst, die mit einer Rolle (16) versehen ist, die mit einem zweiten Nocken (190), der in der drehbaren Buchse (19) eingerichtet ist, zusammenwirken wird, wobei der zweite Nocken (190) vorzugsweise schneckenförmig ist.

10. Behälter für unter Druck stehendes Gas, der mit einem Ventil nach einem der Ansprüche 1 bis 9 ausgestattet ist, insbesondere eine Gasflasche.
